# EUROPÄISCHE PATENTANMELDUNG

(11) **EP 1 442 955 A1**
(43) Veröffentlichungstag der Anmeldung: **04.08.2004**
(21) Anmeldenummer: 04001580.2
(22) Anmeldetag: 26.01.2004
(51) Int. Cl.: B61D 27/00, B60H 1/00

(54) **Einrichtung zur Luftableitung aus einem Fahrzeug**

(30) Priorität: 03.02.2003 DE 10304274
(71) Anmelder: SIEMENS AKTIENGESELLSCHAFT, 80333 München (DE)
(72) Erfinder: Krause, Robert, 91052 Erlangen (DE)

(57) **Zusammenfassung**

Die Erfindung betrifft eine Einrichtung zur Luftableitung aus einem Fahrzeug, insbesondere aus einem Straßenbahnfahrzeug, wobei eine Klimaanlage auf dem Dach des Fahrzeugs in einem Gehäuse angeordnet ist. Es ist vorgesehen, dass im Dach eine Öffnung für die Fortluft angeordnet ist und dass die Öffnung durch das Gehäuse überdacht ist. Insbesondere ist in dem Gehäuse der Klimaanlage ein Kanal für die Fortluft vorhanden.

## Beschreibung

Die Erfindung betrifft eine Einrichtung zur Luftableitung aus einem Fahrzeug, insbesondere aus einem Straßenbahnfahrzeug, wobei eine Klimaanlage auf dem Dach des Fahrzeugs in einem Gehäuse angeordnet ist.

Bei einer üblichen Klimaanlage wird Außenluft, die gegebenenfalls gekühlt oder erwärmt wird, in das Fahrzeug hineingeleitet. Da sich infolgedessen ein Überdruck im Fahrzeug aufbauen kann, der beim Schließen der Türen stört, ist es erforderlich, Öffnungen zum Ableiten der sogenannten Fortluft vorzusehen. Öffnungen in den Seitenwänden führen zu unerwünschten Geräuschen. Daher war es bisher üblich, auf dem Dach eines Fahrzeuges als solche bekannte Kuckuckslüfter anzuordnen.

Der Erfindung liegt die Aufgabe zugrunde, eine Einrichtung zur Luftableitung aus einem Fahrzeug anzugeben, die ohne diese zusätzlichen Kuckuckslüfter auskommt und die trotzdem ohne Schallbeeinträchtigungen einen störenden Aufbau eines Überdruckes im Fahrzeug verhindert.

Die Aufgabe wird gemäß der Erfindung dadurch gelöst, dass im Dach des Fahrzeuges eine Öffnung für die Fortluft angeordnet ist und dass die Öffnung durch das Gehäuse überdacht ist.

Es wird also, wie beim Kuckuckslüfter, die Fortluft durch das Dach abgeleitet, ohne dass jedoch eine separate aufwändige Entlüftungsvorrichtung notwendig wäre. Das ohnehin vorhandene Gehäuse der Klimaanlage verhindert vorteilhafterweise, dass Regenwasser oder andere Stoffe von außen durch die Öffnung für die Fortluft ins Innere des Fahrzeuges gelangen können.

Nach einer besonderen Ausgestaltung ist die im Dach des Fahrzeugs angeordnete Öffnung für die Fortluft durch einen Kanal, der sich im Gehäuse der Klimaanlage befindet, mit einer Austrittsöffnung am Gehäuse verbunden. Der Kanal verbindet das Innere des Fahrzeuges mit dem Außenbereich. Er ist räumlich, z.B. nur durch eine Trennwand, von den übrigen Bestandteilen der Klimaanlage getrennt.

Die Außenöffnung des Kanales ist so angeordnet, dass kein Regenwasser oder andere Substanzen in Gegenrichtung zur Fortluft ins Innere des Fahrzeuges gelangen können.

Insbesondere befindet sich die Öffnung für die Fortluft in der Stirnfläche des Gehäuses. Besonders geeignet ist, damit keine Substanzen von Außen in den Kanal gelangen können, die in Fahrtrichtung hintere Stirnfläche des Gehäuses.

Beispielsweise ist im Gehäuse der Klimaanlage eine Ansaugöffnung für Außenluft von der Öffnung für die Fortluft hinsichtlich der Luftströmungen getrennt angeordnet.

Falls sich die Fortluftöffnung im Bereich der Stirnseite der Klimaanlage befindet, ist die Ansaugöffnung der Klimaanlage beispielsweise an der Seitenwand des Gehäuses der Klimaanlage angeordnet. Es wird dadurch verhindert, dass die Fortluft wieder angesaugt wird.

Mit der Einrichtung nach der Erfindung wird insbesondere der Vorteil erzielt, dass mit einfachen Mitteln eine zuverlässige Entlüftung des Fahrzeugs möglich ist. Es sind keine zusätzlichen Geräte, wie Kuckuckslüfter erforderlich.

## Patentansprüche

1. Einrichtung zur Luftableitung aus einem Fahrzeug, insbesondere aus einem Straßenbahnfahrzeug, wobei eine Klimaanlage auf dem Dach des Fahrzeugs in einem Gehäuse angeordnet ist, **dadurch gekennzeichnet, dass** im Dach eine Öffnung für die Fortluft angeordnet ist und dass die Öffnung durch das Gehäuse überdacht ist.

2. Einrichtung nach Anspruch 1,
**dadurch gekennzeichnet, dass** die im Dach des Fahrzeuges angeordnete Öffnung für die Fortluft durch einen Kanal, der sich im Gehäuse der Klimaanlage befindet, mit einer Austrittsöffnung am Gehäuse verbunden ist.

3. Einrichtung nach einem der Ansprüche 1 oder 2,
**dadurch gekennzeichnet, dass** im Gehäuse der Klimaanlage eine Ansaugöffnung für Außenluft von der Öffnung für die Fortluft hinsichtlich der Luftströmungen getrennt angeordnet ist.
